# EUROPEAN PATENT APPLICATION

(11) **EP 4 376 171 A1**
(43) Date of publication of application: **29.05.2024**
(21) Application number: 23188253.1
(22) Date of filing: 27.07.2023
(51) Int. Cl.: H01M 10/613, H01M 10/625, H01M 10/6567, H01M 50/204

(54) **COOLING BOX AND BATTERY PACK**

(30) Priority: 23.11.2022 CN 202223116755 U
(71) Applicant: Sungrow Energy Storage Technology Co., Ltd., Hefei, Anhui 230088 (CN)
(72) Inventor: WANG, Hao, Hefei (CN); DONG, Puyun, Hefei (CN); SU, Jinguo, Hefei (CN)
(74) Representative: Zacco Norway AS

(57) **Abstract**

A cooling box and a battery pack are provided. The cooling box includes a chassis and a cooling assembly. The chassis is provided with a first side wall, a bottom wall and a lower accommodation cavity surrounded by the first side wall and the bottom wall. The cooling assembly is arranged in the lower accommodation cavity, and includes a lower flow-channel plate and an upper flow-channel plate. The upper flow-channel plate is sealingly connected to the chassis, and a sealed accommodation space is formed between the upper flow-channel plate and the chassis. The lower flow-channel plate is arranged in the accommodation space, and a flow-channel space is formed between the upper flow-channel plate and the lower flow-channel plate. With the cooling box in the technical solutions of the present application, the problem that the sealability of the connection between the lower flow-channel plate and a frame is required to be considered for a conventional cooling assembly can be solved.

## Description

### FIELD

The present application relates to the technical field of energy batteries, and in particular to a cooling box and a battery pack.

### BACKGROUND

With the increasing shortage of traditional energy sources, the demand for renewable energy sources is becoming stronger and stronger, and the demand for energy storage is also rising simultaneously. Nowadays, energy storage technology is mostly based on battery modules. A battery module includes multiple independent cells arranged in a matrix. The distance between the cells is short, and thus the requirement of heat dissipation for the battery module is high.

The heat dissipation of conventional battery modules is realized by using liquid cooling heat dissipation technology. A cooling assembly is added in a box of a battery pack. Specifically, an upper flow-channel plate and a lower flow-channel plate are added on a frame, and form a chassis together with the frame; a cooling liquid is introduced into a cooling flow channel formed between the upper flow-channel plate and the lower flow-channel plate; a battery module is fixed on an upper surface of the upper flow-channel plate, and the heat dissipation of the battery module is realized by the heat exchanging with the cooling liquid. Considering the problem of preventing the leakage of the cooling liquid, the cooling assembly is required to be full welded or glued, to ensure the sealability of the connection between both the upper flow-channel plate and the lower flow-channel plate and the frame, and the sealing method is complicated.

### SUMMARY

The main object of the present application is to provide a cooling box and a battery pack, which can solve the problem that the sealability of the connection between the lower flow-channel plate and the frame is required to be considered for a conventional cooling assembly.

In order to achieve the above object, a cooling box is provided according to an aspect of the present application. The cooling box includes a chassis and a cooling assembly, where the chassis is provided with a first side wall, a bottom wall and a lower accommodation cavity surrounded by the first side wall and the bottom wall. The cooling assembly is arranged in the lower accommodation cavity and includes a lower flow-channel plate and an upper flow-channel plate, the upper flow-channel plate is sealingly connected to the chassis, a sealed accommodation space is formed between the upper flow-channel plate and the chassis, the lower flow-channel plate is arranged in the accommodation space, and a flow-channel space is formed between the upper flow-channel plate and the lower flow-channel plate.

In an embodiment, the cooling box further includes a support structure, and the support structure is arranged between the chassis and the cooling assembly.

In an embodiment, the support structure is integrated with the chassis, and the support structure protrudes from the bottom wall of the chassis towards a bottom of the lower flow-channel plate to support the lower flow-channel plate; or the support structure is integrated with the lower flow-channel plate, and the support structure protrudes from a bottom of the lower flow-channel plate towards the chassis and is supported on the chassis.

In an embodiment, a lower surface of the lower flow-channel plate is spaced apart from an upper surface of the bottom wall of the chassis, to form a buffer space for deformation of the cooling assembly.

In an embodiment, the cooling assembly further includes a buffer heat insulation member, which is arranged in the buffer space, and the buffer heat insulation member is made of an elastically deformable soft heat insulation material.

In an embodiment, the lower flow-channel plate includes multiple protrusions protruding towards the upper flow-channel plate, a lower surface of the upper flow-channel plate fits with upper surfaces of the protrusions, and a cooling flow channel is formed between any two adjacent ones of the protrusions.

In an embodiment, the first side wall is integrated with the bottom wall.

In an embodiment, the cooling box further includes: a reinforcing rib connected to an outer wall surface of the chassis.

In an embodiment, a rolling wheel or a lifting hole is arranged on the reinforcing rib.

In an embodiment, the cooling box further includes an upper cover, the upper cover has an upper accommodation cavity, the upper cover is sealingly connected to the chassis, a mounting space is formed by the upper accommodation cavity and the lower accommodation cavity, and the mounting space is configured to accommodate a battery module.

In an embodiment, the cooling assembly further includes an inflow pipe and an outflow pipe, a water inlet and a water outlet are formed in the first side wall, the inflow pipe is configured to pass through the water inlet and is in communication with the flow-channel space, the outflow pipe is configured to pass through the water outlet and is in communication with the flow-channel space, and one end of the inflow pipe and one end of the outflow pipe are arranged outside the chassis.

A battery pack is provided according to another aspect of the present application, and the battery pack includes a battery module and the cooling box according to any one of the above embodiments.

With the technical solutions of the present application, the upper flow-channel plate and the lower flow-channel plate are arranged in the lower accommodation cavity of the chassis. The upper flow-channel plate is sealingly connected to the first side wall of the chassis to form the sealed accommodation space. The cooling liquid is provided in the flow-channel space, and the flow-channel space is arranged in the accommodation space. Due to the sealing of the accommodation space, the cooling liquid cannot be leaked, and since the lower flow-channel plate is arranged in the accommodation space, the sealability of the connection between the lower flow-channel plate and the chassis is not required to be considered, that is, it is not required to seal a space between the lower flow-channel plate and the chassis by using complicated sealing methods such as full welding or gluing.

### BRIEF DESCRIPTION OF THE DRAWINGS

The accompanying drawings constituting a part of the present application are used to provide a further understanding of the present application. The schematic embodiments of the present application and the description thereof are used to explain the present application and do not constitute an improper limitation to the present application. In the accompanying drawings:
FIG 1 shows a schematic structural view of a cooling box according to an embodiment of the present application;
FIG. 2 shows an schematic exploded view of the cooling box in FIG 1;
FIG 3 shows a top view of the cooling box in FIG 1 with an upper cover being removed;
FIG. 4 shows a sectional view of the cooling box along a line A-A in FIG 3;
FIG 5 shows a partially enlarged view of an area C in FIG 4;
FIG. 6 shows a sectional view of the cooling box along a line B-B in FIG 3;
FIG. 7 shows a partially enlarged view of an area D in FIG 6;
FIG. 8 shows a bottom view of the cooling box in FIG 3; and
FIG 9 shows a schematic exploded view of a battery pack according to an embodiment of the present application.

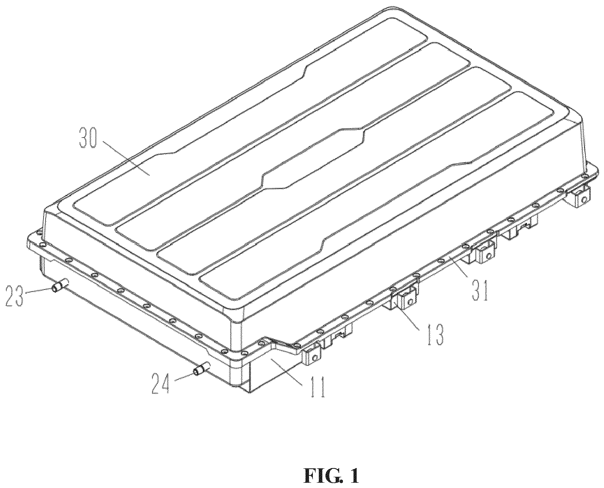

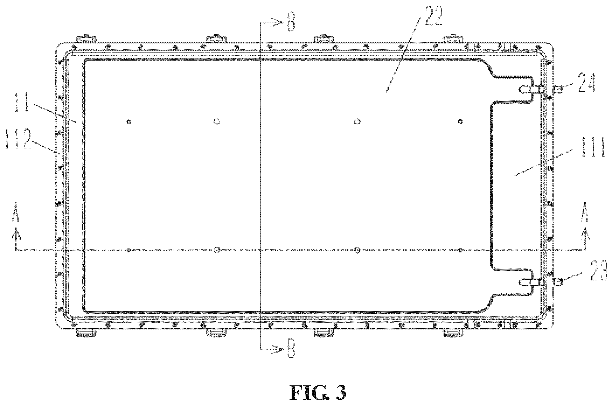

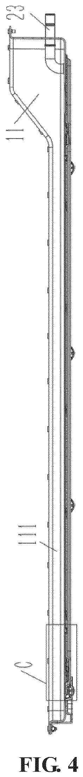

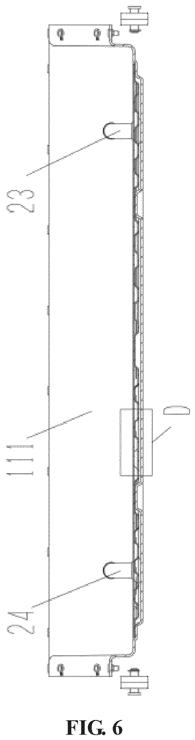

The above FIGS. 1 to 9 include the following reference numerals:

| | | | |
|---|---|---|---|
| 11 | chassis | 111 | lower accommodation cavity |
| 112 | lower flange ring | 113 | water inlet |
| 114 | water outlet | 12 | support structure |
| 13 | reinforcing rib | 14 | accommodation space |
| 21 | lower flow-channel plate | 211 | protrusion |
| 212 | cooling flow channel | 22 | upper flow-channel plate |
| 23 | inflow pipe | 24 | outflow pipe |
| 30 | upper cover | 31 | upper flange ring |
| 90 | battery module | | |

### DETAILED DESCRIPTION OF THE EMBODIMENTS

It should be noted that, in the case of no conflict, the embodiments of the present application and features in the embodiments can be combined with each other. The present application is described in detail below with reference to the accompanying drawings and in conjunction with the embodiments.

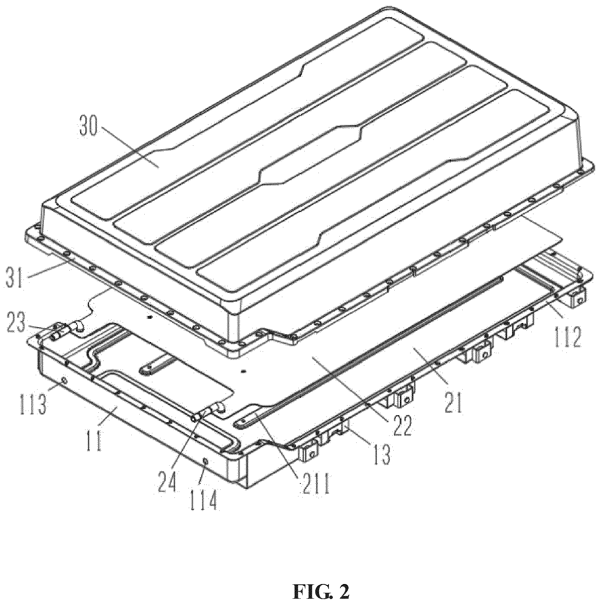

Referring to FIGS. 2, 3, 5 and 7, a cooling box is provided according to the present application. The cooling box includes a chassis 11 and a cooling assembly. The chassis 11 is provided with a first side wall, a bottom wall and a lower accommodation cavity 111 surrounded by the first side wall and the bottom wall. The cooling assembly is arranged in the lower accommodation cavity 111, and includes a lower flow-channel plate 21 and an upper flow-channel plate 22. The upper flow-channel plate 22 is sealingly connected to the chassis 11, and a sealed accommodation space 14 is formed between the upper flow-channel plate 22 and the chassis 11. The lower flow-channel plate 21 is arranged in the accommodation space 14, and a flow-channel space is formed between the upper flow-channel plate 22 and the lower flow-channel plate 21.

In the above technical solution, the upper flow-channel plate 22 is sealingly connected to the first side wall to form the sealed accommodation space 14. As long as the lower flow-channel plate 21 is arranged in the accommodation space 14, the cooling liquid entering the flow-channel space can be ensured not to be leaked, and only the sealing connection between the upper flow-channel plate 22 and the chassis 11 is required to be considered. The area where a bottom of the chassis 11 (i.e. an upper surface of the lower accommodation cavity 111) contacts with the lower flow-channel plate 21 is a component with a uniform wall thickness and without openings. On one hand, the lower accommodation cavity 111 is configured to provide the accommodation space 14 for the cooling assembly. On the other hand, the lower accommodation cavity 111 is configured to accommodate the entire cooling assembly inside the chassis 11, so that it is not required to consider the sealing between the lower flow-channel plate 21 and the chassis 11, that is, it is not required to perform additional sealing measures, such as welding or gluing, to ensure the sealability of the connection between the lower flow-channel plate 21 and the chassis 11.

In an embodiment, the upper flow-channel plate 22 is sealingly and fixedly connected to the chassis 11 by welding, and an upper surface of the lower flow-channel plate 21 is welded to a lower surface of the upper flow-channel plate 22.

Compared to conventional cooling assemblies, the accommodation space 14 in the cooling box is more airtight with the above arrangement, and there are fewer factors that affect the leakage of the cooling liquid.

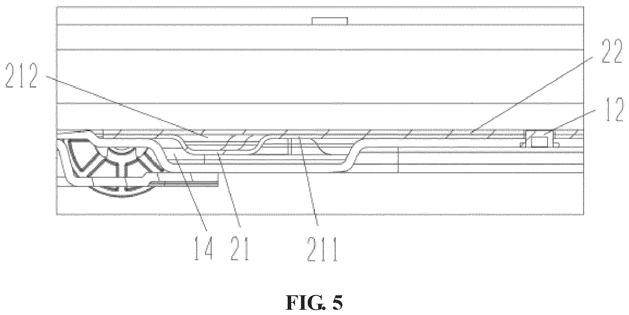

Referring to FIG 5, in an embodiment of the present application, the cooling box further includes a support structure 12, and the support structure 12 is arranged between the chassis 11 and the cooling assembly.

As shown in FIG 5, in a first embodiment, the support structure 12 is provided with a connecting component for connecting the support structure 12 to both the chassis 11 and the cooling assembly. The connecting component includes, but not limited to, a screw or a structure adhesive. That is, the support structure 12 connects the chassis 11 with the cooling assembly through the connecting component such as the screw or the structure adhesive.

In a second embodiment, the support structure 12 is integrated with the chassis 11, and the support structure 12 protrudes from the bottom wall of the chassis 11 towards a bottom of the lower flow-channel plate 21 to support the lower flow-channel plate 21.

In a third embodiment, the support structure 12 is integrated with the lower flow-channel plate 21, and the support structure 12 protrudes from a bottom of the lower flow-channel plate 21 towards the chassis 11 and is supported on the chassis 11.

With the above arrangement, the support structure 12 is arranged between the bottom wall of the chassis 11 and a lower surface of the lower flow-channel plate 21. The support structure 12 occupies a part of a space between the chassis 11 and the cooling assembly, so that a space for deformation of the cooling assembly is small, thereby reducing the deformation amplitude of the cooling assembly.

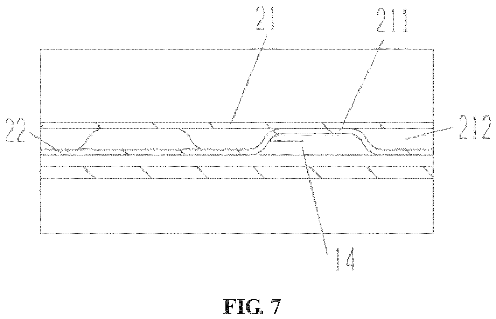

Referring to FIGS. 5 and 7, in an embodiment of the present application, a lower surface of the lower flow-channel plate 21 is spaced apart from an upper surface of the bottom wall of the chassis 11, to form a buffer space for deformation of the cooling assembly.

With the above arrangement, when being subjected to an external force, the lower flow-channel plate 21 can be deformed by compressing the buffer space, ensuring that the lower flow-channel plate 21 and the flow-channel space are not deformed due to stress, thereby ensuring the normal flow of the cooling liquid and not hindering the realization of the cooling function.

In an embodiment of the present application, the cooling assembly further includes a buffer heat insulation member, which is arranged in the buffer space, and the buffer heat insulation member is made of an elastically deformable soft heat insulation material.

In the above technical solution, the buffer heat insulation member has dual functions of buffering and heat insulation. The buffering function is performed under a condition that the lower flow-channel plate 21 is subjected to an external force. When the lower flow-channel plate 21 is deformed and compresses the buffer space, the lower flow-channel plate 21 also compresses the buffer heat insulation member. The buffer heat insulation member has an elastic force, and provides the lower flow-channel plate 21 with a force to cause the lower flow-channel plate 21 to reversely deform, so as to slow down the deformation of the lower flow-channel plate 21. The heat insulation function is performed under a condition that the cooling liquid flows in the flow-channel space. The temperature of the cooling liquid is lower than the temperature outside the chassis 11. The buffer heat insulation member isolates the flow-channel space from the exterior, preventing the influence of the external temperature on the temperature of the cooling liquid, thereby preventing the cooling effect from being affected.

In an embodiment, the buffer heat insulation member is heat insulation cotton.

Referring to FIGS. 2, 5 and 7, in an embodiment of the present application, the lower flow-channel plate 21 includes multiple protrusions 211 protruding towards the upper flow-channel plate 22. The lower surface of the upper flow-channel plate 22 fits with upper surfaces of the protrusions 211, and a cooling flow channel 212 is formed between any two adjacent ones of the protrusions 211.

In the above technical solution, the cooling liquid is introduced into the cooling flow channel 212 and flows in the cooling flow channel 212. The support structure 12 fits with lower surfaces of the protrusions 211. A height of the support structure 12 is greater than heights of the protrusions 211, so that the support structure 12 raises the lower flow-channel plate 21, thereby suspending the lower surface of the lower flow-channel plate 21, so as to form the buffer space.

In an embodiment, the upper flow-channel plate 22 is a flat plate, and the upper flow-channel plate 22 is sealingly and fixedly connected to the lower flow-channel plate 21 by brazing, ensuring the sealability of the cooling flow channel 212.

With the above arrangement, on one hand, the cooling flow channels 212 are formed by the protrusions 211, to provide a flow path for the cooling liquid. On the other hand, the protrusions 211 are configured to connect to the upper flow-channel plate 22.

Referring to FIG. 2, in an embodiment of the present application, the first side wall is integrated with the bottom wall.

In the above technical solution, the chassis 11 is supported by a single-layer substrate, and the chassis 11 is integrated by using a stamping process and not formed by welding multiple components. The integrated structure of the chassis 11 is configured to ensure the airtightness of the accommodation space 14 and prevent external temperature from affecting the temperature of the cooling liquid through the chassis 11.

Referring to FIGS. 1, 2 and 8, in an embodiment of the present application, the cooling box further includes a reinforcing rib 13 connected to an outer wall surface of the chassis 11.

In the above technical solution, there is a predetermined number of reinforcing ribs 13, and the specific number may be determined based on the size of the chassis 11. A single reinforcing rib 13 is arranged along a width direction of the chassis 11, and all of the reinforcing ribs 13 are arranged along a length direction of the chassis 11. The reinforcing ribs 13 fit with an outer wall of the chassis 11. In an embodiment, the reinforcing ribs 13 are welded to the outer wall of the chassis 11.

With the above arrangement, in a first aspect, the reinforcing ribs 13 are configured to strengthen the structural strength of the chassis 11. In a second aspect, the reinforcing ribs 13 raise the chassis 11, so that an area, which is not connected to the reinforcing ribs 13, of the lower surface of the chassis 11 is suspended. While playing a role in supporting the cooling assembly, the reinforcing ribs 13 indirectly provide a deformation space for the lower flow-channel plate 21. That is, the force is transmitted to the chassis 11 when the lower flow-channel plate 21 is deformed, causing the chassis 11 to be deformed. The chassis 11 compresses its remaining space that is suspended and is deformed, improving the flatness of the bottom of the entire load-bearing assembly. In a third aspect, the reinforcing ribs 13 are configured to reduce the occurrence of stress concentration, thereby improving the stability of the entire cooling box and a battery pack.

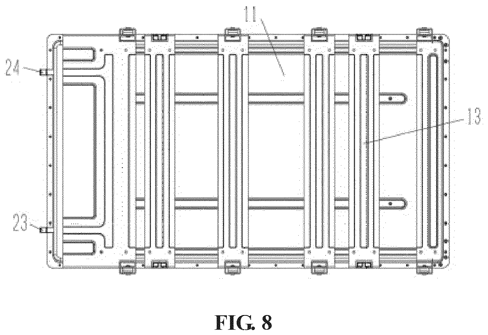

Referring to FIG 8, in an embodiment of the present application, a rolling wheel or a lifting hole is arranged on each of the reinforcing ribs 13.

With the above arrangement, when the entire cooling box is required to be transported, it is more convenient to transport by moving the rolling wheels or the cooperation between a lifting vehicle and the lifting holes.

Referring to FIGS. 1 and 2, in an embodiment of the present application, the cooling box further includes an upper cover 30, and the upper cover 30 has an upper accommodation cavity. The upper cover 30 is sealingly connected to the chassis 11, and a mounting space is formed by the upper accommodation cavity and the lower accommodation cavity 111. The mounting space is configured to accommodate a battery module 90.

In the above technical solution, a lower flange ring 112 extends horizontally around an edge of the chassis 11, and an upper flange ring 31 extends horizontally around an edge of the upper cover 30. The chassis 11 is sealingly and fixedly connected to the upper cover 30 through the upper flange ring 31 and the lower flange ring 112.

With the above arrangement, the mounting space formed is a sealed space, and the mounting space is isolated from the exterior. In a first aspect, the outside air is prevented from entering the mounting space and condensation is formed in the mounting space. In a second aspect, the battery module 90 is not affected by external temperature and humidity and can operate stably. In a third aspect, the cooling liquid is not affected by the external temperature.

Referring to FIGS. 1 to 4, 6 and 8, in an embodiment of the present application, the cooling assembly further includes an inflow pipe 23 and an outflow pipe 24. A water inlet 113 and a water inlet 114 are formed in the first side wall. The inflow pipe 23 is configured to pass through the water inlet 113 and is in communication with the flow-channel space, the outflow pipe 24 is configured to pass through the water outlet 114 and is in communication with the flow-channel space, and one end of the inflow pipe 23 and one end of the outflow pipe 24 are arranged outside the chassis 11.

In the above technical solution, the inflow pipe 23 is configured to introduce the cooling liquid into the cooling flow channels 212, and the outflow pipe 24 is configured to discharge the cooling liquid from the cooling flow channels 212. The circulation of the cooling liquid in the cooling flow channels 212 can be realized by the cooperation of the inflow pipe 23 and the outflow pipe 24. An outer wall of the inflow pipe 23 and an outer wall of the outflow pipe 24 are sealed with a wall surface of the chassis 11 by gluing or adding sealing rings, to ensure the sealability and the stability of the inflow pipe 23 and the outflow pipe 24. The water inlet 113 and the water outlet 114 are arranged outside the accommodation space 14, that is, the water inlet 113 and the water outlet 114 are formed on a part of the chassis 11 except for a part assembled with the cooling assembly, which does not affect the sealability of the accommodation space 14.

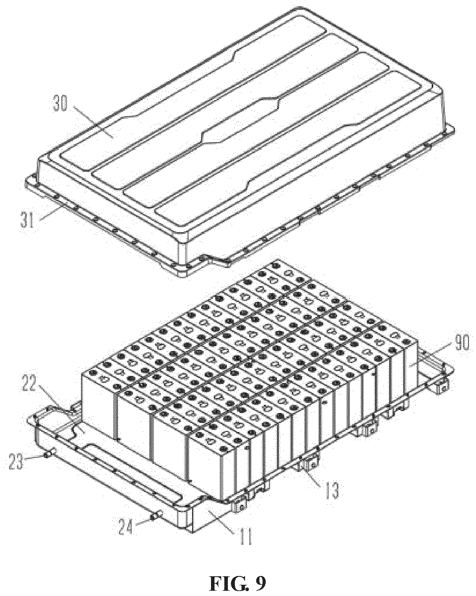

Referring to FIG 9, a battery pack is further provided according to the present application. The battery pack includes a battery module 90 and the above cooling box.

From the above description, it can be seen that the above embodiments of the present application can achieve the following technical effects.
(1) The sealability of the accommodation space is achieved. The consideration of the sealability between the lower flow-channel plate and the chassis is eliminated, and the cooling liquid is ensured not to be leaked.
(2) The design of the support structure, on one hand, reduces the deformation amplitude of the lower flow-channel plate, and on the other hand, creates the buffer space between the lower flow-channel plate and the chassis, so that the shapes of the cooling flow channels remain unchanged.
(3) The airtightness of the mounting space is ensured, so that the battery module and the cooling liquid are not affected by external air.

Apparently, the embodiments described above are only a part of the embodiments of the present application, not all of them. All other embodiments obtained by those skilled in the art based on the embodiments in the present application without creative efforts shall fall within the protection scope of the present application.

It should be noted that the terms used here are only for describing specific embodiments, and are not intended to limit the exemplary embodiments according to the present application. As used herein, the singular form is also intended to include the plural form, unless explicitly indicated in the context. In addition, it should be understood that when the terms "comprise" and/or "include" are used in the specification, they indicate the presence of features, steps, operations, devices, components and/or combinations of them.

The above is only preferred embodiments of the present application and is not intended to limit the present application. For those skilled in the art, the present application may have various modifications and changes. Any modifications, equivalent replacements, improvements and the like made within the spirit and principles of the present application shall be included in the protection scope of the present application.

## Claims

1. A cooling box, comprising:
a chassis (11), wherein the chassis (11) is provided with a first side wall, a bottom wall and a lower accommodation cavity (111) surrounded by the first side wall and the bottom wall; and
a cooling assembly, arranged in the lower accommodation cavity (111), wherein the cooling assembly comprises a lower flow-channel plate (21) and an upper flow-channel plate (22), the upper flow-channel plate (22) is sealingly connected to the chassis (11), a sealed accommodation space (14) is formed between the upper flow-channel plate (22) and the chassis (11), the lower flow-channel plate (21) is arranged in the accommodation space (14), and a flow-channel space is formed between the upper flow-channel plate (22) and the lower flow-channel plate (21).

2. The cooling box according to claim 1, further comprising: a support structure (12), wherein the support structure (12) is arranged between the chassis (11) and the cooling assembly.

3. The cooling box according to claim 2, wherein
the support structure (12) is integrated with the chassis (11), and the support structure (12) protrudes from the bottom wall of the chassis (11) towards a bottom of the lower flow-channel plate (21) to support the lower flow-channel plate (21); or
the support structure (12) is integrated with the lower flow-channel plate (21), and the support structure (12) protrudes from a bottom of the lower flow-channel plate (21) towards the chassis (11) and is supported on the chassis (11).

4. The cooling box according to claim 1, wherein a lower surface of the lower flow-channel plate (21) is spaced apart from an upper surface of the bottom wall of the chassis (11), to form a buffer space for deformation of the cooling assembly.

5. The cooling box according to claim 4, wherein the cooling assembly further comprises a buffer heat insulation member, which is arranged in the buffer space, and the buffer heat insulation member is made of an elastically deformable soft heat insulation material.

6. The cooling box according to any one of claims 1 to 4, wherein the lower flow-channel plate (21) comprises a plurality of protrusions (211) protruding towards the upper flow-channel plate (22), a lower surface of the upper flow-channel plate (22) fits with upper surfaces of the protrusions (211), and a cooling flow channel (212) is formed between any two adjacent ones of the protrusions (211).

7. The cooling box according to any one of claims 1 to 5, wherein the first side wall is integrated with the bottom wall.

8. The cooling box according to claim 7, further comprising: a reinforcing rib (13) connected to an outer wall surface of the chassis (11).

9. The cooling box according to claim 8, wherein a rolling wheel or a lifting hole is arranged on the reinforcing rib (13).

10. The cooling box according to claim 7, further comprising: an upper cover (30), wherein
the upper cover (30) has an upper accommodation cavity, the upper cover (30) is sealingly connected to the chassis (11), a mounting space is formed by the upper accommodation cavity and the lower accommodation cavity (111), and the mounting space is configured to accommodate a battery module (90).

11. The cooling box according to any one of claims 1 to 5, wherein the cooling assembly further comprises an inflow pipe (23) and an outflow pipe (24), a water inlet (113) and a water outlet (114) are formed in the first side wall, the inflow pipe (23) is configured to pass through the water inlet (13) and is in communication with the flow-channel space, the outflow pipe (24) is configured to pass through the water outlet (114) and is in communication with the flow-channel space, and one end of the inflow pipe (23) and one end of the outflow pipe (24) are arranged outside the chassis (11).

12. A battery pack, comprising a battery module (90) and the cooling box according to any one of claims 1 to 11.
